# EUROPEAN PATENT SPECIFICATION

(11) **EP 2 657 668 B1**
(45) Date of publication and mention of the grant of the patent: **07.09.2016**
(21) Application number: 13164763.8
(22) Date of filing: 22.04.2013
(51) Int. Cl.: G01L 7/18, G01N 9/22

(54) **Method and Device for determining the hydrostatic pressure in a liquid mass**
Verfahren und System zur bestimmung des hydrostatischen Drucks in einer flüssigen Masse.
Méthode et dispositif pour déterminer du pression hydrostatique dans une masse liquide.

(30) Priority: 28.04.2012 BE 201200286
(43) Date of publication of application: 30.10.2013
(73) Proprietor: Dec N.V. (Deme Environmental Contractors), 2070 Zwijndrecht (BE)
(72) Inventor: Durt, Dominique Maria Colette Hubert, B2640 Mortsel (BE); Paridaens, Kobe, B2070 Zwijndrecht (BE)
(74) Representative: Brouwer, Hendrik Rogier

(56) References cited:
- US-A- 2 645 128
- US-A1- 2005 210 975

## Description

The invention relates to a device and method for determining the hydrostatic pressure in a solid/liquid mixture. The invention likewise relates to a method for obtaining information about a mass of settled solid in a solid/liquid mixture by making use of the device.

The invention will be elucidated hereinbelow within the context of a process step applied in cleaning soil. The invention is however by no means limited hereto, and the invented device and method can likewise be applied to determine the hydrostatic pressure in a solid/liquid mixture in other fields, such as for instance in geotechnical engineering in general, in environmental engineering and/or for instance to determine sedimentation in (oil) storage tanks or to obtain information about a partially settleable liquid cargo in a ships' hold.

There is a great need to improve land, particularly in urban areas, after polluting installations such as chemical and petrochemical plants have for instance been dismantled and removed from this land. Improvement creates building land on which building projects such as sport and leisure centres, parks, homes and the like can be realized. In a typical improvement process contaminated soil is excavated, transported to a cleaning installation and there processed, wherein contaminated residue is dumped at closely controlled landfill sites. The available cleaning processes may comprise of physical, chemical and microbiological treatments, in which water or another liquid can be added in determined process steps and in which separation techniques play an important part.

A cleaning process can be performed in different stages, wherein a pretreatment is for instance aimed at removing larger objects from the soil, for instance by screening, removing ferrous objects from the soil by applying magnetism, removing gravel from the soil using a vibrating screen, and so on. An important component of a cleaning device comprises an upflow column. In such an upflow column the pretreated soil is injected from below with water jets, whereby the soil is at least partially fluidized. The lighter (contaminated) particles present in such a solid/liquid mixture float to the top and are discharged via an overflow. The heavier particles will gradually settle on the bottom and form a growing sand layer, sludge layer or sand/sludge layer. When sufficiently thick, this layer can be discharged via a discharge.

It is of great importance to obtain information about the load in the upflow column. The moment at which the load is discharged thus depends for instance on the characteristics of the load (sand, sludge or a mixture thereof), wherein a wrong choice may cause blockage of the upflow column, whereby it has to be disassembled and manually emptied. Requirements can also be set for the quality of the load of the upflow column.

The maximum filling height of the upflow column is determined by the height position of an overflow present in the upflow column. The heavier soil particles collected in the upflow column will settle after a time and thus form a settled layer of more or less closely packed coarser particles in the upflow column, this layer increasing in height as the fluidizing progresses. On top of the settled layer forms a non-settled layer of substantially finer particles free-floating in water (a suspension). The upflow column is filled to a maximum by placing the overflow in a highest position. As soon as the level of the suctioned-up solid/water mixture reaches the top of the overflow, mixture flows via the overflow to a discharge. By already obtaining information as according to the invention about the load in the upflow column during loading, the decision on whether or not to continue loading with overflow or to discharge the load can be expedited, whereby clogging of the upflow column can be avoided.

It is known to determine the height (from which follows the volume) and the weight of the load in the upflow column. The height of the load can for instance be determined by means of acoustic signals, while the weight of the load can for instance be determined by placing the upflow column on scales. An average density can be determined from the height and the weight of the load. This average density does not however provide any further information about the load and whether it is for instance partially or otherwise settled or in suspension.

In another known method the top level of the settled solid, for instance sand, can be measured by approximation and at discrete locations by lowering a plumb line through the soil mixture. This method is however imprecise.

In yet another known method a measurement of the hydrostatic pressure in the solid/liquid mixture is performed. The height of the liquid column in the upflow column can be determined from the measurement of the hydrostatic pressure, and comparing this height to the measured loading level makes it possible to determine the quantity of settled solid, such as sand, in the mixture. In theory this method allows information about the soil load to be obtained in automated manner, wherein the results of the measurements are transmitted continuously to a computer which derives the information, wherein there is insight into the characteristics of the load at all times.

It has been found however that the known methods produce results which are inaccurate and/or available too late. US-2005/0210975 discloses an underwater weighing container having a porous botton plate. An object of the present invention is therefore to provide a device and method with which the hydrostatic pressure in a solid/liquid mixture can be determined in accurate manner. Another object relates to providing a device for obtaining information about a mass of settled solid in a solid/liquid mixture.

The invention provides for this purpose a device comprising a housing, a part of which is permeable to the liquid and which further comprises a liquid chamber connecting to the permeable part and a pressure sensor connecting via a closing element to the liquid chamber; wherein the liquid chamber comprises an inlet for a flushing liquid and the permeable part is also permeable to the flushing liquid.

The invention likewise relates to a method for determining the hydrostatic pressure in a solid/liquid mixture, such as a soil load in an upflow column, wherein the device is immersed in the liquid mass, wherein mixture liquid penetrates the permeable part; a flushing liquid is introduced into the liquid chamber via the inlet of the liquid chamber at a pressure such that substantially no solid penetrates the permeable part; and the hydrostatic pressure acting on the permeable part is transmitted to the pressure sensor via the flushing liquid in the liquid chamber and the closing element. By carrying the device to a measuring point at a determined depth of the solid/liquid mixture the hydrostatic pressure at this measuring point can be determined in accurate manner. The accuracy of the measurement is increased, among other ways, by introducing the flushing liquid into the liquid chamber via the inlet of the liquid chamber at a pressure or at an optionally variable or pulsated flow rate such that substantially no solid penetrates the permeable part; and by transmitting the hydrostatic pressure acting on the permeable part to the pressure sensor via the flushing liquid in the liquid chamber and the closing element.

The device according to the invention can in principle comprise any suitable type of pressure sensor, such as for instance a piezometer. In the context of the present application the permeable part of the housing is understood to mean any part permeable to the liquid of the solid/liquid mixture. In an embodiment of the invention the permeable part for instance comprises a wall part of the housing which comprises a porous element. In another embodiment of the invention the housing comprises for instance a cascade separator, the nested wall parts of which form the permeable part. It will be apparent that different options are available to the skilled person for embodying the permeable part of the housing.

In a solid/water mixture collected in an upflow column or other environment the overall pressure, after deduction of the atmospheric pressure, is determined at a measuring point at a determined depth by the measured hydrostatic pressure and by the grain pressure. The hydrostatic pressure at the measuring point depends only on the liquid level in the basin, the gravitational acceleration and the liquid density, and is given by the product of the above stated three quantities. The grain pressure is caused by direct contact between grains, wherein the grains in a horizontal plane transfer the weight of the grains lying thereabove to an underlying layer, less the Archimedean force in the case they are in a liquid.

According to an embodiment of the device according to the invention, the liquid chamber comprises an outlet for the flushing liquid. There is in this way no or only limited build-up of additional pressure (in addition to the hydrostatic pressure of the solid/liquid mixture) in the liquid chamber. It is advantageous that the outlet comprises the permeable part and that the permeable part is permeable to the flushing liquid. The pressure in the liquid chamber can in this way be adjusted such that a flow occurs out of the liquid chamber through the permeable part, wherein even less solid can enter the liquid chamber through the element. The chance of blockage, and thus of an incorrect measurement, is hereby further reduced.

According to a further embodiment the device according to the invention further comprises pump means connected to the inlet for introducing the flushing liquid under pressure into the liquid chamber. This embodiment is particularly advantageous the smaller the solid particles in the solid/liquid mixture or the smaller the particles comprised by the solid particle distribution.

Yet another embodiment of the device according to the invention is characterized in that the pump means are configured to introduce the flushing liquid at a preset constant flow rate into the liquid chamber. The pressure in the liquid chamber depends here on, among other factors, the resistance encountered by the flushing liquid flow as it flows through the outlet, and particularly through the permeable part. The present embodiment allows the operation of the device to be adapted to the properties of the solid/liquid mixture, wherein the properties may include the size distribution of the solid particles, the shape of the particles, physical properties of the particles such as their surface tension, and so on.

According to a further improved embodiment of the device according to the invention, the pump means are configured to introduce the flushing liquid at a preset intermittently constant flow rate into the liquid chamber. Intermittently constant flow rate is understood to mean a flow rate profile over time comprising periods of constant flow rate, wherein the flow rate can differ per period. The flow rate can thus have a positive value for determined periods and vary to zero in other periods. Such a pulsating flow rate is found to enhance the accuracy of the measurement of the hydrostatic pressure. It is also possible to configure the pump means such that the flow rate profile forms a sawtooth profile over time, or any other periodically pulsating profile.

In yet another embodiment of the device according to the invention the pump means comprise an outlet valve for regulating the pump pressure in the liquid chamber. The present embodiment enables at least temporary release of the pressure in the liquid chamber if it has risen so high that it threatens to disrupt or is disrupting the measurement of the hydrostatic pressure. Other methods of pressure control are however also possible, particularly application of a pump with variable rotation speed, a constant flow rate pump and/or further alternatives.

The closing element of the device according to the invention forms the connection between the liquid chamber and the pressure sensor. According to an embodiment of the device, the closing element is substantially impermeable to the liquid, and more preferably also substantially impermeable to the flushing liquid. The closing element connects the liquid chamber to the pressure sensor and can in principle comprise any element that is substantially impermeable to the liquid, and more preferably also to the flushing liquid. A particularly suitable closing element comprises a membrane substantially impermeable to the liquid. If desired, the device is provided with a per se known atmospheric pressure compensation.

Also provided according to the invention is a method for determining the hydrostatic pressure in a solid/liquid mixture, such as a soil load in an upflow column. In the method a device according to any of the discussed embodiments is immersed in the solid/liquid mixture, wherein mixture liquid penetrates the permeable part; a flushing liquid is introduced into the liquid chamber via the inlet of the liquid chamber at a pressure or flow rate such that substantially no solid penetrates the permeable part, and the hydrostatic pressure acting on the permeable part is transmitted to the pressure sensor via the flushing liquid in the liquid chamber and the closing element.

In an embodiment the method is characterized in that the flushing liquid comprises means for improved flushing, particularly HCl for the purpose of descaling, and/or an ultrasonic source is applied.

In an embodiment of the method according to the invention the flushing liquid is introduced into the liquid chamber at a pressure such that the flushing liquid penetrates the permeable part.

The flushing liquid can in principle be any liquid which can be pumped by the pump means and which can penetrate the permeable part. The flushing liquid however preferably comprises water.

In an embodiment of the method the flushing liquid is introduced into the liquid chamber under pressure via pump means connected to the inlet. The closing element and the pressures are chosen here such that preferably substantially no liquid and/or flushing liquid penetrates the closing element.

It is advantageous for the flushing liquid to be introduced at a preset constant flow rate into the liquid chamber. Although the flow rate can be chosen within wide limits, suitable flow rates are those at which substantially no solid penetrates the permeable part so that blockage of this element is substantially prevented. Suitable flow rates depend on, among other factors, the size of the water chamber, a minimal influence on the density of the soil load of the upflow column, the available quantity of pure water/flushing liquid, the permissible pressures for measuring instrument and pump, and the like. Suitable flow rates are preferably relatively low, in the order of magnitude of litres per hour. Particularly suitable flow rates lie between 0.1 and 20 l/h, more preferably between 0.5 and 10 l/h and most preferably between 1 and 5 l/h.

In another embodiment of the method the flushing liquid is introduced intermittently at a preset constant flow rate into the liquid chamber. Such a flow rate profile pulsating over time provides for an even more accurate measurement of the hydrostatic pressure in the solid/liquid mixture.

It is advantageous here that the pump means are controllable and comprise for instance an outlet valve, and the pump pressure in the liquid chamber is controlled by opening and/or closing the outlet valve. A further advantage of the control valve is that, for instance in the case of great differences in height between pump and measuring device, it is possible to prevent a vacuum forming in the feed conduit.

The above described device and method according to the invention allow an accurate measurement of the hydrostatic pressure to be obtained in a relatively short space of time in a solid/liquid mixture at a determined depth, for instance in an upflow column or in a water mass such as a river, sea. On the basis hereof information can be obtained in accurate manner about the solid/liquid mixture in the water mass, particularly about a soil load in an upflow column of a cleaning device.

The invention therefore also relates to a method for obtaining information about a mass of settled solid in a solid/liquid mixture in a water mass, particularly the soil load in an upflow column, wherein the height of the solid/liquid mixture level is determined, the hydrostatic pressure close to the bottom of the basin is measured by means of any one of the embodiments of the method according to the invention, and the information is derived from the two measurements.

In an embodiment of the method according to the invention the quantity of settled solid and the quantity of solid in suspension in a solid/liquid mixture can be determined A number of measurements are combined for this purpose, in particular a measurement of the hydrostatic pressure according to the invention, from which the height of the liquid column in the upflow column can be determined more accurately than in the prior art, and a measurement of the overall pressure close to the bottom of the upflow column. By comparing the hydrostatic pressure measured close to the bottom and the overall pressure measured close to the bottom it is for instance possible to deduce whether the load is a substantially homogeneous mixture (in which case the two pressures are substantially the same) or whether the load is on the contrary a heterogenous mixture of a solid in a liquid (in which case the two pressures differ). An overall pressure measurement is easy to perform, for instance by placing a weighing cell at the measuring point. Then determined from the two pressure measurements and a measurement of the height of the solid/liquid mixture are the density of the overall mixture (from the overall pressure measurement) and the density of the liquid or suspension (from the hydrostatic pressure measurement). The total amount of solid or TDS of the mixture is then calculated from the two densities. The quantity of settled solid follows from the difference between the measured hydrostatic and overall pressure. The difference between the total quantity of solid or TDS and the quantity of settled solid gives the quantity of solid in suspension, while the ratio of the quantity of settled solid and the total quantity of solid gives the percentage of settled solid. It is important to note that the device according to the invention allows a continuous measurement, whereby the percentage of settled solid in the solid/liquid mixture can be monitored at all times. According to the invention the percentage of settled solid can further provide information about the particle distribution of the solid in the mixture.

The device and method according to the invention for instance make it possible, for a combination of sludge and sand, to determine how many tons of dry settled material (so most likely sand) and how many tons of dry non-settled (suspended) material (so most likely sludge) are present in a solid/liquid mixture.

It will further be apparent that the invention is not limited to the use of one device according to the invention, but that several devices are immersed if desired in the solid/liquid mixture in the basin so as to measure the hydrostatic and/or overall pressure simultaneously at different measuring points.

The method and device according to the invention will now be further elucidated with reference to the following figures, without the invention otherwise being limited thereto. In the figures:
figure 1 is a schematic side view of an upflow column provided with an embodiment of a device according to the invention;
figure 2A is a schematic side view of an embodiment of a device according to the invention;

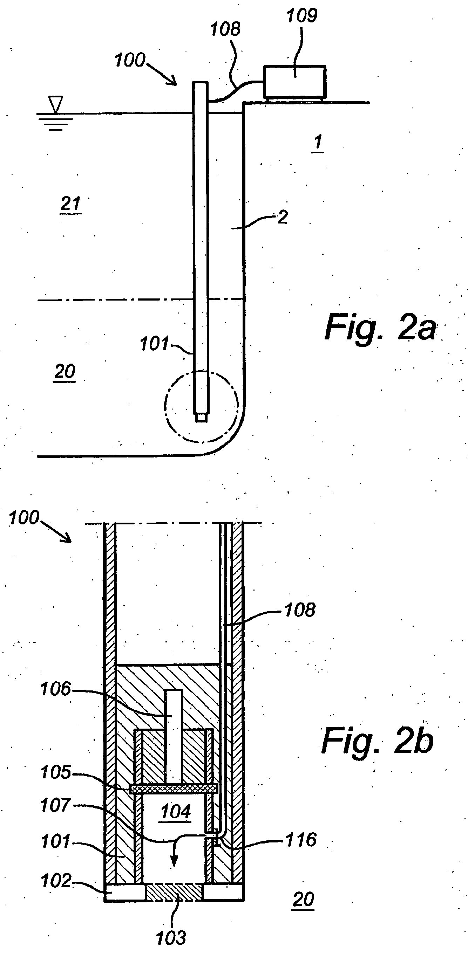

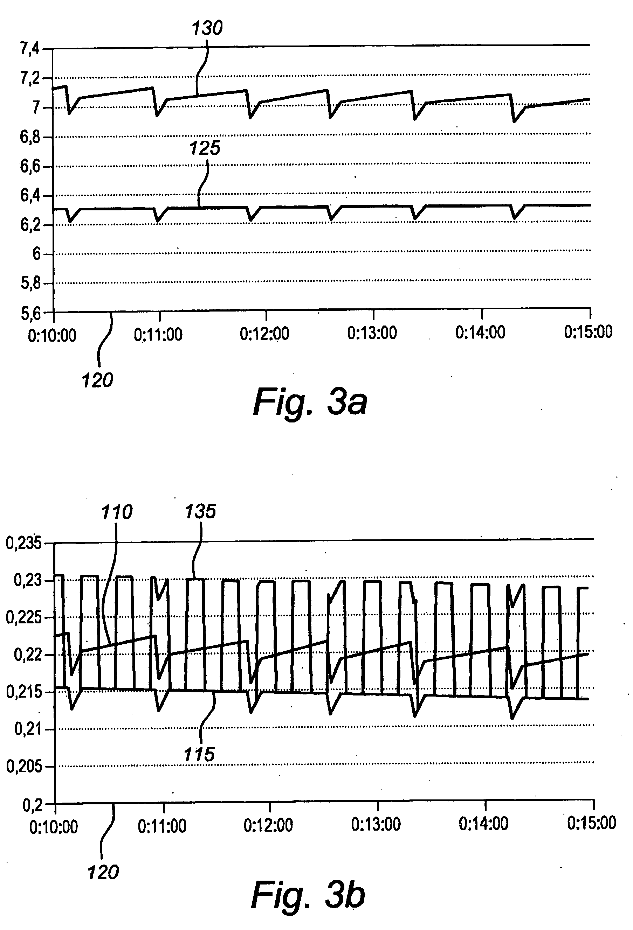

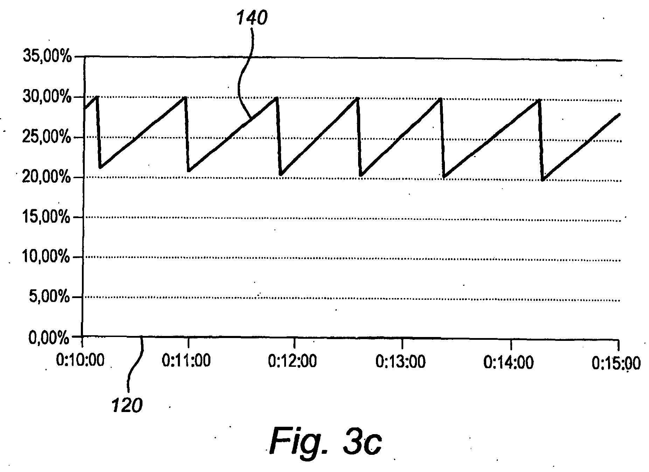

figure 2B is a schematic side view of a detail of the embodiment shown in figure 2A; figure 3A shows an example of the variation, measured by known methods, in the volume and the mass as a function of time of a sand/liquid load in an upflow column; figure 3B shows an example of the variation, measured by an embodiment of the device according to the invention, in the hydrostatic pressure in the water chamber of the device and the derived variation in the hydrostatic pressure at the bottom of the sand/liquid load of figure 3A, and the variation in the overall pressure at the bottom of the sand/liquid load of figure 3A measured by a weighing cell; and figure 3C shows an example of the variation, derived by an embodiment of the device according to the invention, in the percentage of settled mass in relation to the total mass of dry material of the sand/liquid load of figure 3A.

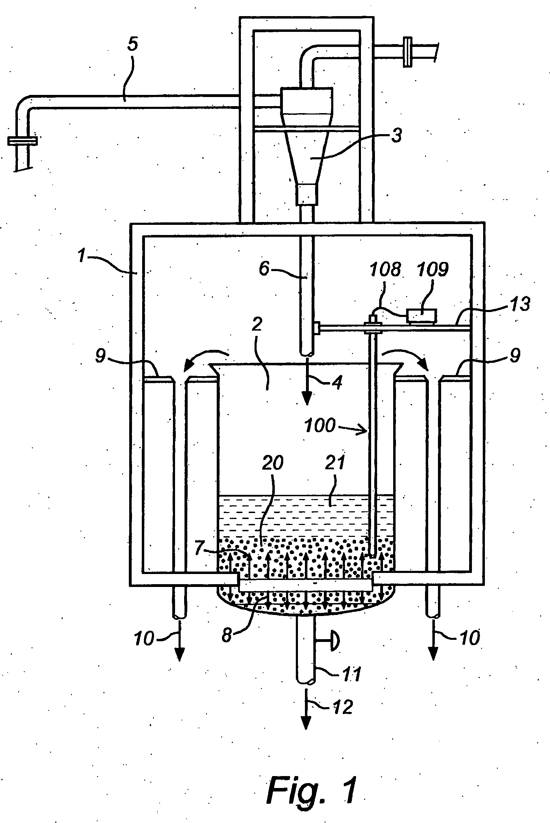

The device according to the invention makes it possible to obtain information in accurate manner about the soil load in the upflow column of a cleaning device. Referring to figure 1, such a cleaning device comprises, among other parts (only a part is shown), a frame 1 in which an upflow column 2 is received. Upflow column 2 is fed contaminated soil which is supplied as according to arrow 4 through a feed conduit 6 to upflow column 2 via a discharge conduit 5 connected to a cyclone 3.

Upflow column 2 is suitable for receiving the (partially) contaminated soil mixture supplied by conduit 6. On the underside of upflow column 2 water 7 is injected via a number of inlets 8 into the soil mixture, whereby it is fluidized. This produces a solid/liquid mixture in upflow column 2. The lighter (contaminated) particles present in such a solid/liquid mixture float to the top and are discharged as according to arrows 10 via overflows 9 for further treatment. The heavier particles will gradually settle on the bottom ofupflow column 2 and form a growing settled sand layer, sludge layer or sand/sludge layer 20. When the amount of settled material becomes too great, one of the bottom doors (not shown) is opened at a time for a short period of time so that excess settled material can be discharged. When sufficiently thick, layer 20 can optionally also be discharged as according to arrow 12 via a discharge 11. If this layer becomes too thick, upflow column 2 will become clogged and will have to be shovelled empty. Depending on the composition of the solid/liquid mixture, a layer 21 comprising an aqueous suspension of non-settled contaminated soil material may possibly form on the settled layer 20. Provided the volume and the mass in the tank can be measured on the basis of existing techniques, the invention allows the quantity of settled material to be calculated at any time and allows too large a quantity of settled material to be anticipated.

An embodiment of device 100 for determining the hydrostatic pressure in a solid/liquid mixture is shown in figures 2A and 2B. The shown embodiment comprises a housing 101, a permeable part of which is formed by a wall part 102 comprising a porous element 103, for instance a porous ceramic element. Porous element 103 is permeable to the liquid of the soil mixture, in this case the water fraction. Connected to porous element 103 is a water chamber 104 which connects to a pressure sensor 106 via a closing element in the form of membrane 105. Water chamber 104 has a closable inlet 116 through which a flushing liquid 107 (see the arrow in figure 2B) can be supplied under pressure to water chamber 104 by means of pump means connected to inlet 116 and taking the form of a feed conduit 108 and a volumetric pump 109. A suitable flushing liquid 107 comprises water. It is noted that the flushing liquid has to be a liquid. A gas such as for instance air does not provide the desired result. Pump 109 is located in the shown embodiment on a platform 13 mounted on frame 1 of the cleaning device, although this pump can also be situated below the level of the soil load (20, 21) in upflow column 2. Because porous element 103 is permeable to flushing liquid 107, owing to the pressure developed in water chamber 104 the liquid will egress at least partially through porous element 103, where it comes into contact with the surrounding soil load 20 (or 21). In the shown embodiment closing membrane 105 is impermeable to the liquid of the solid/liquid mixture, in this case the water in the contaminated soil mixture 20, and also impermeable to flushing liquid 107. The greatest accuracy is achieved when pump 109 introduces flushing liquid 107 into water chamber 104 at a preset constant flow rate, and in particular in a pattern pulsating over time, wherein the flow rate 'switches' between two or more levels.

Pump 109 and/or the feed conduit between pump 109 and inlet 116 is preferably provided with control means, for instance in the form of an outlet valve (not shown), for regulating the pump flow rate in water chamber 104.

Pressure sensor 106 can comprise any suitable pressure sensor, such as pressure cells based on the use of for instance strain gauges. It is also possible to apply piezometer pressure sensors such as a standpipe, wherein water rises via a filter from below through the pipe to a level dependent on the pressure, vibrating wire piezometers and/or pneumatic piezometers.

The hydrostatic pressure in a solid/liquid load (20, 21) can be determined in accurate manner using the device. On the basis of such measurements at one or more measuring points close to the bottom of upflow column 2 information can be obtained about the load (20, 21) in upflow column 2. In an embodiment the overall pressure close to the bottom of upflow column 2 is measured or otherwise determined according to the invention in such a method, as is the hydrostatic pressure. The overall pressure in the soil load (20, 21) can be determined in any manner, for instance by placing a weighing cell or overall pressure measuring cell at the measuring point.

By comparing the hydrostatic pressure measured close to the bottom to the measured overall pressure close to the bottom it is possible to derive whether the load is a substantially homogeneous mixture (in which case the two pressures are substantially the same) or whether the load is on the contrary a heterogeneous mixture of a solid in a liquid (in which case the two pressures differ).

Figure 3A illustrates the variation in the volume 125 (in m³) and mass 130 (in tons) of a sand/liquid mixture present in an upflow column. The volume and the mass are measured using existing techniques, such as for instance weighing. The regular dips in the measured variations indicate brief opening of the bottom doors of the upflow column so that an excess of settled material is discharged, and so mass and volume disappear.

Figure 3B shows the variation in the hydrostatic pressure 135 in the water chamber of the device measured by an embodiment of the device according to the invention. The variation in the hydrostatic pressure 135 is intermittent because the water chamber is flushed at regular times. The variation in the hydrostatic pressure 115 at the bottom of the sand/liquid mixture can be derived in simple manner from the hydrostatic pressure 135 measured in the water chamber. Figure 3B illustrates that, for the sand/liquid mixture of figure 3A, the variation in the overall pressure 110 (in bar) as a function of time 120 measured with an existing technique does not correspond to the variation in the hydrostatic pressure 115 (in bar) in the soil load as a function of time 120 measured with the device according to the invention. The higher values for the overall pressure 110 are caused by the share of the grain pressure between the sand grains in the measured overall pressure. Such a difference thus indicates a heterogeneous sand/water or sand/sludge load.

Finally, figure 3C illustrates the variation derived from an embodiment of the device according to the invention in the percentage of settled mass 140 (in %) in relation to the total mass of dry material of the mixture of figure 3A. The rising line portions indicate an increase in settled material relative to the total mass of material. The sudden decreases indicate the opening of the bottom doors and the discharging of settled material. The device according to the invention allows accurate measurement of the variation in said relation so that it is possible to determine at any moment whether the settled load has to be discharged in order to prevent problems such as blockage. It is also possible to accurately determine when sufficient settled material has been discharged.

## Claims

1. Device (100) for determining the hydrostatic pressure in a solid/liquid mixture (20,21), the device comprising a housing (101), a part (103) of which is permeable to the liquid (20, 21), and which further comprises a liquid chamber (104) connecting to the permeable part (103) and a pressure sensor (106) connecting to the liquid chamber (104), **characterised in that** the liquid chamber (104) comprises an inlet (116) for a flushing liquid (107) and the permeable part (103) is also permeable to the flushing liquid (107).

2. Device as claimed in claim 1, wherein the permeable part (103) is formed by a wall part of the housing (101) which comprises a porous element.

3. Device as claimed in claim 1 or 2, wherein the pressure sensor (106) is connected to the liquid chamber (104) via a closing element (105).

4. Device as claimed in any of the foregoing claims, wherein the liquid chamber (104) comprises an outlet for the flushing liquid (107) other than the permeable part (103).

5. Device as claimed in any of the foregoing claims, further comprising pump means (109) connected to the inlet (116) for introducing the flushing liquid (107) under pressure into the liquid chamber (104).

6. Device as claimed in any of the foregoing claims, wherein the closing element (105) is substantially impermeable to the liquid and/or the flushing liquid (107).

7. Device as claimed in any of the foregoing claims, wherein the pump means (109) are configured to introduce the flushing liquid (107) at a preset constant flow rate into the liquid chamber (104).

8. Device as claimed in any of the foregoing claims, wherein the pump means (109) are configured to introduce the flushing liquid (107) at a preset intermittently constant flow rate into the liquid chamber (104).

9. Device as claimed in any of the foregoing claims, wherein the pump means (109) comprise an outlet valve for regulating the pump pressure in the liquid chamber (104).

10. Method for determining the hydrostatic pressure in a solid/liquid mixture, such as a soil load in an upflow column, wherein a device as claimed in any of the foregoing claims is immersed in the liquid mass, wherein mixture liquid penetrates the permeable part; **characterised in that** a flushing liquid is introduced into the liquid chamber via the inlet of the liquid chamber at a pressure such that substantially no solid penetrates the permeable part; and the hydrostatic pressure acting on the permeable part is transmitted to the pressure sensor via the flushing liquid in the liquid chamber and the closing element.

11. Method as claimed in claim 10, wherein the flushing liquid is introduced into the liquid chamber at a pressure such that the flushing liquid penetrates the permeable part.

12. Method as claimed in claim 10 or 11, wherein the flushing liquid comprises water.

13. Method as claimed in any of the claims 10-12, wherein the flushing liquid comprises means for improved flushing, particularly HCl for the purpose of descaling, and/or an ultrasonic source is applied.

14. Method as claimed in any of the claims 10-13, wherein the flushing liquid is introduced into the liquid chamber under pressure via pump means connected to the inlet.

15. Method as claimed in any of the claims 10-14, wherein substantially no liquid and/or flushing liquid penetrates the closing element.

16. Method as claimed in any of the claims 10-15, wherein the flushing liquid is introduced at a preset constant flow rate into the liquid chamber.

17. Method as claimed in any of the claims 10-15, wherein the flushing liquid is introduced intermittently at a preset constant flow rate into the liquid chamber.

18. Method as claimed in any of the claims 10-17, wherein the pump means are controllable and/or comprise an outlet valve, and/or the liquid chamber comprises an inlet valve, and the pump pressure in the liquid chamber is controlled by opening and/or closing the outlet valve and/or the inlet valve.

19. Method for obtaining information about a mass of settled solid in a solid/liquid mixture in a basin, particularly the soil load in an upflow column, wherein the height of the solid/liquid mixture level is determined, the hydrostatic pressure close to the bottom of the basin is measured by means of a method as claimed in any of the claims 10-18, the overall pressure close to the bottom of the basin is measured and the information is derived from these measurements.

20. Method as claimed in claim 19, wherein the overall pressure (close to the bottom) of the basin is determined by determining the total weight of the mixture and dividing this by the transverse surface area of the basin.

21. Method as claimed in claim 19 or 20, wherein the hydrostatic pressure close to the bottom is compared to the overall pressure close to the bottom, and from this comparison is deduced whether the load is a substantially homogeneous load, typically sludge, or whether the load is on the contrary a heterogenous mixture of a solid in a liquid, typically a sand/water mixture.

22. Method as claimed in any of the claims 19-21, wherein the hydrostatic pressure close to the bottom is compared to the overall pressure close to the bottom, and the percentage of settled load is derived from this comparison.

## Patentansprüche

1. Vorrichtung (100) zum Bestimmen des hydrostatischen Drucks in einem Fest-Flüssig-Gemisch (20, 21), wobei die Vorrichtung ein Gehäuse (101) aufweist, wovon ein Teil (103) durchlässig für die Flüssigkeit (20, 21) ist, und die weiterhin eine Flüssigkeitskammer (104) aufweist, die mit dem durchlässigen Teil (103) verbunden ist, sowie einen Drucksensor (106), der mit der Flüssigkeitskammer (104) verbunden ist, **dadurch gekennzeichnet, dass** die Flüssigkeitskammer (104) einen Einlass (116) für eine Spülflüssigkeit (107) aufweist und der durchlässige Teil (103) auch für die Spülflüssigkeit (107) durchlässig ist.

2. Vorrichtung nach Anspruch 1, wobei der durchlässige Teil (103) durch einen Wandteil des Gehäuses (101) gebildet wird, der ein poröses Element aufweist.

3. Vorrichtung nach Anspruch 1 oder 2, wobei der Drucksensor (106) über ein Verschlusselement (105) mit der Flüssigkeitskammer (104) verbunden ist.

4. Vorrichtung nach einem der vorherigen Ansprüche, wobei die Flüssigkeitskammer (104) einen anderen Auslass für die Spülflüssigkeit (107) als den durchlässigen Teil (103) aufweist.

5. Vorrichtung nach einem der vorherigen Ansprüche, die weiterhin ein Pumpenmittel (109) aufweist, das mit dem Einlass (116) verbunden ist, um die Spülflüssigkeit (107) unter Druck in die Flüssigkeitskammer (104) einzuführen.

6. Vorrichtung nach einem der vorherigen Ansprüche, wobei das Verschlusselement (105) im Wesentlichen undurchlässig für die Flüssigkeit und/oder die Spülflüssigkeit (107) ist.

7. Vorrichtung nach einem der vorherigen Ansprüche, wobei das Pumpenmittel (109) so konfiguriert ist, dass die Spülflüssigkeit (107) mit einer zuvor festgelegten konstanten Durchflussgeschwindigkeit in die Flüssigkeitskammer (104) eingeführt wird.

8. Vorrichtung nach einem der vorherigen Ansprüche, wobei das Pumpenmittel (109) so konfiguriert ist, dass die Spülflüssigkeit (107) mit einer zuvor festgelegten konstanten Durchflussgeschwindigkeit mit Unterbrechungen in die Flüssigkeitskammer (104) eingeführt wird.

9. Vorrichtung nach einem der vorherigen Ansprüche, wobei das Pumpenmittel (109) ein Auslassventil zum Regeln des Pumpendrucks in der Flüssigkeitskammer (104) aufweist.

10. Verfahren zum Bestimmen des hydrostatischen Drucks in einem Fest-Flüssig-Gemisch, beispielsweise einer Bodenladung in einer Aufströmsäule, wobei eine Vorrichtung nach einem der vorherigen Ansprüche in die Flüssigkeitsmasse getaucht wird, wobei Flüssigkeit des Gemisches den durchlässigen Teil durchdringt, **dadurch gekennzeichnet, dass** über den Einlass der Flüssigkeitskammer eine Spülflüssigkeit mit einem solchen Druck in die Flüssigkeitskammer eingeführt wird, dass im Wesentlichen keine Feststoffe durch den durchlässigen Teil hindurchgehen, und dass der hydrostatische Druck, der auf den durchlässigen Teil ausgeübt wird, über die Spülflüssigkeit in der Flüssigkeitskammer und das Verschlusselement zum Drucksensor übertragen wird.

11. Verfahren nach Anspruch 10, wobei die Spülflüssigkeit mit einem solchen Druck in die Flüssigkeitskammer eingeführt wird, dass die Spülflüssigkeit den durchlässigen Teil durchdringt.

12. Verfahren nach Anspruch 10 oder 11, wobei die Spülflüssigkeit Wasser aufweist.

13. Verfahren nach einem der Ansprüche 10 bis 12, wobei die Spülflüssigkeit ein Mittel zum Verbessern des Spülens aufweist, insbesondere HCl zum Entkalken, und/oder eine Ultraschallquelle verwendet wird.

14. Verfahren nach einem der Ansprüche 10 bis 13, wobei die Spülflüssigkeit über ein Pumpenmittel, das mit dem Einlass verbunden ist, mit Druck in die Flüssigkeitskammer eingeführt wird.

15. Verfahren nach einem der Ansprüche 10 bis 14, wobei im Wesentlichen keine Flüssigkeit und/oder keine Spülflüssigkeit das Verschlusselement durchdringt.

16. Verfahren nach einem der Ansprüche 10 bis 15, wobei die Spülflüssigkeit mit einer zuvor festgelegten konstanten Durchlassgeschwindigkeit in die Flüssigkeitskammer eingeführt wird.

17. Verfahren nach einem der Ansprüche 10 bis 15, wobei die Spülflüssigkeit mit einer zuvor festgelegten konstanten Durchflussgeschwindigkeit mit Unterbrechungen in die Flüssigkeitskammer eingeführt wird.

18. Verfahren nach einem der Ansprüche 10 bis 17, wobei das Pumpenmittel steuerbar ist und/oder ein Auslassventil aufweist, und/oder die Flüssigkeitskammer ein Einlassventil aufweist, und der Pumpendruck in der Flüssigkeitskammer durch Öffnen und/oder Schließen des Auslassventils und/oder des Einlassventils geregelt wird.

19. Verfahren zum Einholen von Informationen über eine Masse von abgesetzten Feststoffen in einem Fest-Flüssig-Gemisch in einem Becken, insbesondere die Bodenladung in einer Aufströmsäule, wobei die Höhe des Füllstands des Fest-Flüssig-Gemisches festgelegt ist, der hydrostatische Druck in der Nähe des Bodens des Beckens mit einem Verfahren nach einem der Ansprüche 10 bis 18 gemessen wird, der Gesamtdruck in der Nähe des Bodens des Beckens gemessen wird und die Informationen diesen Messungen entnommen werden.

20. Verfahren nach Anspruch 19, wobei der Gesamtdruck (in der Nähe des Bodens) des Beckens durch Bestimmen des Gesamtgewichts des Gemisches und Teilen dieses Wertes durch die Querfläche des Beckens bestimmt wird.

21. Verfahren nach Anspruch 19 oder 20, wobei der hydrostatische Druck in der Nähe des Bodens mit dem Gesamtdruck in der Nähe des Bodens verglichen wird, und wobei anhand dieses Vergleichs ermittelt wird, ob es sich bei der Ladung um eine im Wesentlichen homogene Ladung handelt, typischerweise Schlamm, oder ob es sich bei der Ladung im Gegenteil um ein heterogenes Gemisch eines Feststoffs in einer Flüssigkeit handelt, typischerweise ein Sand-Wasser-Gemisch.

22. Verfahren nach einem der Ansprüche 19 bis 21, wobei der hydrostatische Druck in der Nähe des Bodens mit dem Gesamtdruck in der Nähe des Bodens verglichen wird, und der prozentuale Anteil der abgesetzten Ladung auf der Grundlage dieses Vergleichs ermittelt wird.

## Revendications

1. Dispositif (100) de détermination de la pression hydrostatique dans un mélange matière solide/liquide (20, 21), le dispositif comprenant un logement (101) dont une partie (103) est perméable au liquide (20, 21), et qui comprend par ailleurs une chambre (104) à liquide relié à la partie perméable (103) et un capteur de pression (106) relié à la chambre (104) à liquide, **caractérisé en ce que** la chambre (104) à liquide comprend une entrée (116) pour un liquide de rinçage (107) et **en ce que** la partie perméable (103) est aussi perméable au liquide de rinçage (107).

2. Dispositif selon la revendication 1, dans lequel la partie perméable (103) est formée par une partie de paroi du logement (101) qui comprend un élément poreux.

3. Dispositif selon la revendication 1 ou 2, dans lequel le capteur de pression (106) est relié à la chambre (104) à liquide au moyen d'un élément obturateur (105).

4. Dispositif selon l'une quelconque des revendications précédentes, dans lequel la chambre (104) à liquide comprend pour le liquide de rinçage (107) une sortie autre que la partie perméable (103).

5. Dispositif selon l'une quelconque des revendications précédentes, comprenant par ailleurs des moyens de pompage (109) reliés à l'entrée (116) en vue de l'introduction du liquide de rinçage (107) sous pression dans la chambre (104) à liquide.

6. Dispositif selon l'une quelconque des revendications précédentes, dans lequel l'élément obturateur (105) est sensiblement imperméable au liquide et/ou au liquide de rinçage (107).

7. Dispositif selon l'une quelconque des revendications précédentes, dans lequel les moyens de pompage (109) sont configurés pour introduire dans la chambre (104) à liquide le liquide de rinçage (107) à un débit constant prédéfini.

8. Dispositif selon l'une quelconque des revendications précédentes, dans lequel les moyens de pompage (109) sont configurés pour introduire le liquide de rinçage (107) à un débit prédéfini constant par intermittence dans la chambre (104) à liquide.

9. Dispositif selon l'une quelconque des revendications précédentes, dans lequel les moyens de pompage (109) comprennent une soupape de sortie permettant de réguler la pression de pompage dans la chambre (104) à liquide.

10. Procédé de détermination de la pression hydrostatique d'un mélange matière solide/liquide, tel qu'une charge de terres dans une colonne à flux ascendant, dans lequel un dispositif selon l'une quelconque des revendications précédentes est immergé dans la masse liquide, dans lequel le liquide du mélange pénètre dans la partie perméable, **caractérisé en ce qu'**un liquide de rinçage est introduit dans la chambre à liquide par l'entrée de la chambre à liquide à une pression telle que sensiblement aucune matière solide ne pénètre dans la partie perméable, et **en ce que** la pression hydrostatique agissant sur la partie perméable est transmise au capteur de pression au moyen du liquide de rinçage dans la chambre à liquide et de l'élément obturateur.

11. Procédé selon la revendication 10, dans lequel le liquide de rinçage est introduit dans la chambre à liquide à une pression telle que le liquide de rinçage pénètre dans la partie perméable.

12. Procédé selon la revendication 10 ou 11, dans lequel le liquide de rinçage comprend de l'eau.

13. Procédé selon l'une quelconque des revendications 10-12, dans lequel le liquide de rinçage comprend des moyens pour améliorer le rinçage, notamment du HCl dans le but de détartrer, et/ou on applique une source d'ultrasons.

14. Procédé selon l'une quelconque des revendications 10-13, dans lequel le liquide de rinçage est introduit dans la chambre à liquide sous pression à l'aide de moyens de pompage reliés à l'entrée.

15. Procédé selon l'une quelconque des revendications 10-14, dans lequel sensiblement aucun liquide et/ou liquide de rinçage ne pénètre dans l'élément obturateur.

16. Procédé selon l'une quelconque des revendications 10-15, dans lequel le liquide de rinçage est introduit dans la chambre à liquide à un débit constant prédéfini.

17. Procédé selon l'une quelconque des revendications 10-15, dans lequel le liquide de rinçage est introduit dans la chambre à liquide par intermittence à un débit constant prédéfini.

18. Procédé selon l'une quelconque des revendications 10-17, dans lequel les moyens de pompage peuvent être commandés et/ou comprennent une soupape de sortie, et/ou la chambre à liquide comprend une soupape d'entrée et la pression de pompage dans la chambre à liquide est commandée par l'ouverture et/ou la fermeture de la soupape de sortie et/ou de la soupape d'entrée.

19. Procédé d'obtention d'informations sur une masse de décantat dans un mélange matière solide/liquide dans un bassin, notamment la charge de sols dans une colonne à flux ascendant, dans lequel on détermine la hauteur du niveau du mélange matière solide/liquide, on mesure la pression hydrostatique près du fond du bassin au moyen d'un procédé selon l'une quelconque des revendications 10-18, on mesure la pression totale près du fond du bassin et on déduit les informations de ces mesures.

20. Procédé selon la revendication 19, dans lequel on détermine la pression totale (près du fond) du bassin en déterminant le poids total du mélange et en le divisant par l'aire de la surface transversale du bassin.

21. Procédé selon la revendication 19 ou 20, dans lequel on compare la pression hydrostatique près du fond à la pression globale près du fond et l'on déduit de cette comparaison le fait de savoir si la charge est une charge sensiblement homogène, classiquement des boues, ou si la charge est, au contraire, un mélange hétérogène d'une matière solide dans un liquide, classiquement un mélange sable/eau.

22. Procédé selon l'une quelconque des revendications 19-21, dans lequel on compare la pression hydrostatique près du fond à la pression globale près du fond et on déduit de cette comparaison le pourcentage de charge déposée.
